# EUROPEAN PATENT SPECIFICATION

(11) **EP 3 184 599 B1**
(45) Date of publication and mention of the grant of the patent: **30.09.2020**
(21) Application number: 15460135.5
(22) Date of filing: 22.12.2015
(51) Int. Cl.: C09K 3/18

(54) **AGENT FOR REMOVING AND PREVENTING ICING**
MITTEL ZUM AUSBAU UND VERHINDERUNG VEREISUNG
AGENT D'ELIMINATION ET DE PREVENTION DU GIVRAGE

(43) Date of publication of application: 28.06.2017
(73) Proprietor: Boryszew S.A. Oddzial Boryszew ERG w Sochaczewie, 96-500 Sochaczew (PL)
(72) Inventor: Banach, Robert, 96-500 Sochaczew (PL); Balcerak, Pawel, 96-500 Sochaczew (PL); Ciarka, Malgorzata, 96-500 Sochaczew (PL); Dzida, Marzena, 43-502 Czechowice-Dziedzice (PL); Ilnicki, Marek, 02-394 Warszawa (PL); Kordzi, Wioletta, 96-500 Sochaczew (PL); Krohn, Marlena, 87-125 Silno (PL); Matusiak, Paulina, 96-500 Sochaczew (PL); Musial, Mateusz, 89-310 Lobzenica (PL); Rabczenko, Andrzej, 05-805 Otrebusy (PL); Skupinski, Sebastian, 96-516 Szymanów (PL); Wawryniuk, Anna, 05-123 Chotomów (PL)

(56) References cited:
- CN-A- 101 332 160
- US-A1- 2014 042 357

## Description

The subject of the present invention is an agent for removing and preventing icing, particularly applicable in the de-icing and the protection against icing of aircraft. Agents for removing and preventing icing, beside their use in the aviation industry for the protection of aircraft surfaces, can be used in the railway industry as well as other sectors for the deicing or protection against icing of a variety of large-size metal structures.

Of particular importance is the use of icing removal/prevention agents in aviation since ice on the surface of an airplane at take-off poses a large risk to flight safety, which can have disastrous consequences. Water freezing on an airplane's surface increases its weight and resistance, resulting in longer take-off distance and lower lift force. Icing of moving external parts of an airplane, which make it possible to control the flight, as well as of wing mechanics can result in blockage and loss of control of the airplane flight. Also dangerous for the airplane during take-off are ice pieces tearing away from the chassis, which may damage important components, e.g. engines.

Due to the above specified reasons, fluids for the removal of or protection against icing are used to remove frost and ice before take-off and to prevent frost and icing during take-off.

Generally, agents for the removal/prevention of icing should be considered with respect to their types. The "Recommendation for De-/Anti-Icing of Aircraft on the Ground" (issue March 1993 by Association of European Airlines (AEA) a number of types are specified for de-icing agents. The subject of the present invention are agents of the types I and II.

In case of Type I de-icing agents, important is a fluid's high de-icing effectiveness and possibly long protection until icing forms again on the surface of an aircraft before take-off in freezing rain or frost, and good flowing of the de-icing fluid off the load-bearing surfaces.

In case of the Type II agents, an essential feature is possibly long-lasting protection against re-icing during take-off in freezing rain or frosty conditions.

However, in case of both types it is important that they don't deteriorate during storage at temperatures up to 100°C. Recommended holdover time for Type I fluids in freezing rain (so called WSET) is at minimum 3 minutes, while in frosting conditions (so called HHET) min. 20 minutes, whereas for the Type II fluids recommended holdover time in freezing rain conditions (so called WSET) is at minimum 30 minutes, while in frosting conditions (so called HHET) min. 240 minutes. Additionally, such fluids should be as much as possible resistant to high-shear forces usually causing substantial decrease in the viscosity of the fluids.

In order to obtain fluid performance such as to ensure effective operation, proper selection of both the base as well as the auxiliary components is necessary. Polish patent specification PL175400 discloses a de-/anti-icing fluid based on glycols (1,2 propanediol and diethylene glycol) and water, comprising a combination of two surfactants, namely one non-ionic surfactant from the fatty alcohol group and a mixture of C₁₂/C₁₄ fatty alcohols alkoxylated using a low-molecule alkyl oxide and one corrosion inibitor: benzotriazole. The fluids described in that patent specification feature satisfactory holdover times and good protection against corrosion, thanks to the use of triazole derivatives (benzotriazole).

Patent US5386968 concerns a glycol-based Type I aircraft de-icing fluid with elongated holdover time, comprising a combination of non-ionic emulsifiers (from the group of ethoxylated alkyl phenols) and anionic emulsifiers (from the group of alkyl aryl sulfonic acid) and comprising, among corrosion inhibitors, salts of phosphoric acid and benzotriazole.

Patent US5389276 concerns a Type I fluid (although there is also information on thickeners, which may also be used in Type II fluids) based on ethylene glycol, ethoxylated alkyl phenol emulsifiers, and trazole derivatives proposed as effective corrosion inhibitors. The preferred thickener in that patent is polyacrylic acid salts.

Patent US5759436 describes fluids (without specifying the type) based on glycols containing from 2 to 3 carbon atoms and oxyalkylene glycols containing from 4 to 6 carbon atoms, but it only focuses on 1,2-propylene glycol and diethylene glycol or their composition. In that patent, among additives there are mentioned surfactants from the group of ethoxylated fatty alcohols and from the group of derivatives of alkyl aryl sulfonic acid, and as the preferred inhibitor it mentions N-methyl N-oleiyloglycine, however, not as a standalone corrosion inhibitor but with the addition of benzotriazole or tolyltriazole.

Patent US 5968407 concerns a Type I de-icing fluid based on toxic ethylene glycol and diethylene glycol with the addition of non-ionic and/or anionic emulsifiers and a corrosion inhibitor in form of tolyltriazole. The patent does not focus on anti-corrosion protection of such a fluid, but only on wettability of the surfaced being de-iced by that fluid.

Patent US 6921495 focuses mainly on formulations of Type I and Type IV fluids based on ethylene glycol, 1,2-propylene glycol, 1,3-propylene glycol, diethylene and dipropylene glycols or their combinations. The patent recommends using ethoxylated fatty acids as surfactants and polyasparaginic or polyglutaminic acid salts as flame retardants. The patent does not propose any anti-corrosion additive. As the thickener, the patent suggests to use crosslinked polyacrylic acid.

Patent EP 1994113 concerns a Type I fluid (party Type II) for de-icing of aircraft, based on 1,3-propylene glycol and its combination with 1,2 propanediol or ethylene and diethylene glycols. The patent does not focus on concrete anti-corrosion additives or surfactants or thickeners.

Patent US 5273673 focuses on Type II fluids based on ethylene, propylene, diethylene and dipropylene glycols, with polyacrylic salts or acryl acid-hydrophobic vinyl ester copolymers as the thickeners, however, similarly to many other patents, ethoxylated alkyl phenols are recommended as the surfactants and tolyltriazole as the preferred corrosion inhibitors.

Similar solutions are described in US5708068, where also the focus is on polyacrylate-based thickeners, but corrosion inhibitors are completely omitted and among the surfactants also alkyl phenol derivatives have been used.

Patent US5817252 mainly contemplates the problem of obtaining Type II fluid solely based on 1,2-propylene glycol, and in particular a whole gamut of non-ionic and ionic emulsifiers has been discussed. The patent does not address the anti-corrosion protection of such a fluid.

Patent application US 2006/0054857 describes Type II and Type IV de-icing fluids based on glycols containing from 2 to 3 carbon atoms and oxyalkylene glycols containing from 4 to 6 carbon atoms, whereas in focuses solely on 1,2-propylene glycol, where as the main thickeners there are used layered silicates (hectorite, bentonite, montmorillonite), the other thickeners being homo- or co-polymers of unsaturated carboxylic acids, polyethylene glycols, polyvinyl alcohols, polyvinylpyrrolidone as well as xanthan gum and cellulose ethers or their combinations, and the surfactants being non-ionic emulsifiers from the group of ethoxylated C₁₂ - C₁₄ alcohols and anionic emulsifiers from the group of alkyl benzenesulfonic compounds or their combinations. The patent does not focus on a concrete corrosion inhibitor, but in the examples only benzotriazole or tolyltriazole are mentioned.

Patent CA 2269398 generally contemplates the addition of a fluorescent dye affording better visibility of the fluid when applied in the night. In the examples, however, ethylene and 1,2-propylene glycols-based Type II fluids are described, with xanthan gum or crosslinked polyacrylic acid used as thickeners and mainly benzotriazole or tolyltriazole recommended as the corrosion inhibitors.

Patent DE 4412790 concerns a Type II fluid based on glycols containint from 2 to 3 carbon atoms in their molecules and oxyalkylene glycols with from 4 to 6 carbon atoms, where it also proposes using as the thickener copolymers of acryl acid and dodecyl methacrylate, however, like in the other patents cited, the recommended corrosion inhibitor is benzotriazole or tolyltriazole.

WO96/23043 describes glycols-based Type II fluids with the addition of various types of xanthan gum as the thickener.

WO 2014/035225 contemplates an inhibitor group used in aircraft de-icing fluids, based on 1,2-propylene glycol and glicerol (from 20 to 85%) or their mixtures. Also proposed is the use of borates and alkali metal phosphates as well as benzoate or salicylate additives, not relevant to the present patent.

US 2014/042357 A1 discloses an anti-icing fluid comprising either 30 wt% 1,2 propanediol and 30 wt% glycerol; or 30 wt% 1,3 propanediol and 30 wt% glycerol; the fluid being a non-Newtonian, Type II, III, or IV aircraft anti-icing fluid. A disadvantage of known de-/anti-icing fluids if that they comprise triazole derivatives, ethoxylated alkyl phenol derivatives, as well as nitrites, nitrates and phosphates which are potential threat to the environment.

Often a disadvantage of known fluids is that their components are not adequately selected, which affects the final parameters of the fluid. Such parameters include holdover time (affected by the addition of a surfactant) or anti-corrosive activity.

In case of de-icing fluids, essential features include high de-icing efficiency and possibly long-lasting protection against re-icing before and during take-off in freezing rain or frosty conditions.

The application of wrong components or inadequate quantities can affect their properties. For instance, improper selection of the emulsifier affects the fluid's surface tension or causes turbidity (which indicates instability of the fluid). For instance, the use of anionic emulsifiers from the group of alkyl benzene sulfonates of alkali metals caused turbidity of the fluid.

In case of Type II fluids the selection of the thickener is essential since its role is to improve the fluid's resistance to high shear forces. When improperly selected, it may cause turbidity of the fluid, which may indicate incomplete compatibility with the base components, and, consequently, instability of the fluid.

It has turned out unexpectedly that a fluid according to the present invention, owing to a new element, a three-component base composition (i.e. 1,2-propanediol, 1,3-propanediol and glycerol) as well as precisely and thoughtfully selected other components, including the corrosion inhibitor, the surfactant and a pH buffer, anti-foaming agent and, optionally, a thickener, and in the case of using metasilicates as the corrosion inhibitors also silicate stabilisers, ensures high de-icing efficiency of the fluid and possibly long protection against re-icing in freezing rain or frosting conditions, ensuring at the same time highest possible protection against corrosion of the surfaces treated and biodegradability of the final products.

The present invention concerns Type I and Type II de-/anti-icing fluids.

The agent for removing and preventing icing comprising a base composition based on glycols and water, according to the present invention, is characterised in that the base composition consists of 1,2-propanediol, 1,3-propanediol and glycerol, whereas the base composition contains from 20 to 45%wt., preferably from 22 to 42%wt. of 1,2 propanediol, from 10 to 18%wt., preferably from 12 to 15%wt. of 1,3-propanediol, and from 37 to 70% wt., preferably from 43 to 66%wt. of glycerol. According to one embodiment, the agent for removing and preventing icing comprises the base composition in a quantity from 80 to 95%wt., preferably from 80 to 88%wt., at least one non-ionic surfactant in a quantity from 0.01 to 1%wt., preferably from 0.05 to 0.5%wt., at least one corrosion inhibitor in a quantity from 0.001 to 1%wt., preferably from 0.01 to 0.5%wt., a pH buffer in a quantity from 0.01 to 0.5%wt., preferably from 0.05 to 0.3%wt., an anti-foam agent in a quantity from 0.01 to 1%wt., preferably from 0.05 to 0.2%wt., a pH regulator to achieve pH at 8.0 - 9.5, a dye in a quantity from 0.001 to 0.01%wt., preferably from 0.003 to 0.007%wt., and water to make up to 100%.

According to another embodiment, the agent for removing and preventing icing according to the present invention comprises the base composition in a quantity from 50 to 65%wt., preferably from 52 to 58%wt., a thickener in a quantity from 0.05 to 0.5%wt., preferably from 0.1 to 0.2%wt., at least one non-ionic surfactant in a quantity from 0.01 to 1%wt., preferably from 0.05 to 0.5%wt., at least one corrosion inhibitor in a quantity from 0.001 to 1%wt., preferably from 0.01 to 0.5%wt., a pH buffer in a quantity from 0.01 to 0.5%wt., preferably from 0.05 to 0.3%wt., an anti-foam agent in a quantity from 0.01 to 1%wt., preferably from 0.05 to 0.2%wt., a pH regulator to achieve pH at 6.5 - 7.5, preferably up to 7.0 - 7.5, a dye in a quantity from 0.0001 to 0.002%wt., preferably from 0.0005 to 0.0015%wt., and water to make up to 100%wt.

It is preferred when in the agents according to both above described embodiments at least two components of the base composition are sourced from renewable resources, where the renewable source-based 1,2-propanediol is sourced from downstream processing of glycerol and/or 1,3-propanediol is sourced from a biotechnological process and/or glycerol is refined to minimum purity of 99.5%.

Preferably, the non-ionic surfactant is selected from a group of copolymers of ethylene oxide and/or propylene oxide (EO/PO), preferably with molecular mass from 2000 ro 3000 g/mol, and preferably the corrosion inhibitor is selected from a group of alkali metal salts of aliphatic organic acids C₈ - C₁₀, preferably the sodium salt of n-nonanoic acid and/or from a group of metasilicates with silicates stabiliser added, preferably hydrated metasilicates of alkali metals, most preferably sodium metasilicate pentahydrate, and most preferably the metasilicate is in a quantity from 0.01 to 0.05%wt., preferably from 0.012 to 0.04%wt., and preferably imidazole is used as the pH buffer, and preferably the anti-foam agent is selected from the group of silicon oils, and preferably the pH regulator is an alkali metal hydroxide, most preferably sodium hydroxide.

In the case a silicate is used as the corrosion inhibitor, it is necessary to use a silicates stabiliser in a quantity from 0.001 to 0.005%wt., preferably from 0.001 to 0.004%wt., said stabiliser selected from the group of siloxanes modified with phosphonic groups.

Additionally, the second embodiment of the agent according to the present invention contains a thickener selected from a group of polyacrylic acid derivatives, preferably crosslinked polyacrylic acid, partly hydrofobized, and preferably fluoresceine is used as the dye.

In case of the first embodiment, eosin yellowish is preferably used as the dye.

An advantage of the de-/anti-icing fluid according to the present invention is that it doesn't include triazole derivatives, ethoxylated alkyl phenol derivatives, as well as nitrites, nitrates and phosphates which are potential threat to the environment.

The fluid according to the present invention is based on a based composition in the form of 1,2-propanediol, 1,3-propanediol and glycerol. Addition of an inhibitor package and a pH buffer allows for effective corrosion protection of parts made of various metals and alloys, as well as galvanized alloys. Aapplication of surfactants improves penetration and wettability of icy surfaces, as well as enhances the protection of the surfaces against icing and modifies fluid rheology. Addition of an anti-foaming agent protects the fluid against foaming during its application, and a dye affords a colour compliant with usual fluid colouring.

In one of the embodiments of the present invention, a thickener has been used to ensure appropriate fluid rheology. Thanks to the use of a thickener from the group of polyacrylic acid derivatives, preferably a crosslinked polyacrylic acid, partly hydrofobized, optimal viscosity fluids were obtained using very low amounts of the thickener, since these thickeners are the best to raise the viscosity of glycol-water systems at very low dosage levels.

The choice of these three ingredients in the quantities according to the present invention has allowed to obtain a de-icing fluid having balanced parameters i.e. a composition having the expected temperature of crystallization was obtained.

In order for the de-icing fluid to have the desired crystallization temperature, higher concentrations of glycerol in relation to 1,2-propanediol have been applied, and the third component, namely 1,3-propanediol, has been included in order to compensate for the high viscosity, mostly accounted for by glycerol, especially at low temperatures. The reason for using 1,3-propanediol in the base composition was that its solutions in temperatures below zero exhibit substantially lower viscosities than 1,2-propylene-glycol solutions and, in particular, than glycerol solutions.

Additionally, the application of glycerol contributed to a reduction chemical oxygen demand the final composition in relation to marketed products based on 1,2-propylene glycol by no less than 10%.

An advantage of the fluids according to the present invention is that, depending on the contents of the base composition and the selection of additives, one can obtain various fluid properties affecting their effectiveness. For a Type I fluid, good dripping from the surface (shorter holdover time) is essential, while for a Type II fluid it is the maintaining of the fluid on the surface (longer flow-off time).

An additional important feature of the fluid according to the present invention is that it meets the requirements of the relevant AMS standards with respect to crystallization temperature. The composition of the fluid according to the present invention ensures keeping for the Type I fluid the crystallization temperature of a solution obtained by volumetric dilution of the fluid with water in a 1:1 ratio at a level not higher than - 20°C, and for the Type II fluid the crystallization temperature of a solution obtained by dilution with water in proportion 1:1 (by weight) of not more than -10°C. Both fluids also exhibit flash points higher than 100°C.

Also, corrosion inhibitor packages applied in the fluid according to the invention ensure its compliance with the requirements relating to the testing of corrosive fluids. An advantage of the corrosion inhibitors applied in the fluid according to the invention is that they are extremely effective, despite their lowest possible content in the fluid. These inhibitors exhibit high effectiveness in particular for aluminium alloys according to AMS 4037 (anodized), according to the AMS 4041, according to AMS 4049, chromate coated magnesium alloy acc. to AMS 4376, titanium alloy acc. to AMS5045, steels acc. to AMS4911 and cadmium coated steel SAE 4130. Corrosion inhibitors have been used for which pitting potential was the top value, characterized by non-toxicity and susceptibility to biodegradation and which do not precipitate from solution in contact with hard water.

In the fluid according to the invention, emulsifiers have been so chosen to achieve surface tension at 30-38 mN/m and stability of the fluid at 95°C after mixing it with hard water in volume proportion 1:1, as well as low foaming.

The de-/anti-icing fluid according to the present invention is further disclosed in embodiments in the following examples.

The de-/anti-icing fluid according to the present invention is made by mixing together an aqueous solution or solutions of corrosion inhibitors and a buffer prepared in a separate vessel (and also a thickener solution in the case of Type II fluid) with the base fluid composition consisting of glycols and glycerol. Tables 1-4 show crystallization temperatures depending on the composition (diluted with water in proportion of 1:1 by volume)

### Table 1-3, comparative examples:

**Table 1**

| **MPG content [% wt.]** | **PDO content [% wt.]** | **Temperature of crystallization (1:1 v/v) [°C]** |
|---|---|---|
| 80 | 0 | -24.7 |
| 72 | 8 | -22.4 |
| 64 | 16 | -23.0 |
| 56 | 24 | -21.5 |
| 48 | 32 | -21.3 |
| 40 | 40 | -21.4 |
| 32 | 48 | -20.5 |
| 24 | 56 | -20.7 |
| 16 | 64 | -20.5 |
| 8 | 72 | -20.7 |
| 0 | 80 | -20.0 |

**Table 2**

| **MPG content [% wt.]** | **Glycerol [% wt.]** | **Temperature of crystallization (1:1 v/v) [°C]** |
|---|---|---|
| 80 | 0 | -24.7 |
| 72 | 8 | -22.2 |
| 64 | 16 | -22.8 |
| 56 | 24 | -21.9 |
| 48 | 32 | -22.0 |
| 40 | 40 | -21.2 |
| 32 | 48 | -21.0 |
| 24 | 56 | -20.9 |
| 16 | 64 | -21.3 |
| 8 | 72 | -20.0 |
| 0 | 80 | -19.5 |

**Table 3**

| **PDO content [% wt.]** | **Glycerol [% wt.]** | **Temperature of crystallization (1:1 v/v) [°C]** |
|---|---|---|
| 80 | 0 | -20.0 |
| 72 | 8 | -19,5 |
| 64 | 16 | -20,0 |
| 56 | 24 | -19,9 |
| 48 | 32 | -21,2 |
| 40 | 40 | -20,9 |
| 32 | 48 | -20,7 |
| 24 | 56 | -19,8 |
| 16 | 64 | -19,8 |
| 8 | 72 | -19,7 |
| 0 | 80 | -19,5 |

**Table 4: Type I fluid according to the invention:**

| **MPG content [% wt.]** | **PDO content [% wt.]** | **Glycerol [% wt.]** | **Temperature of crystallization (1:1 v/v) [°]C** |
|---|---|---|---|
| 40 | 40 | 0 | -22.4 |
| 36 | 36 | 8 | -20.9 |
| 32 | 32 | 16 | -21.4 |
| 28 | 28 | 24 | -20.9 |
| 24 | 24 | 32 | -21.6 |
| 20 | 20 | 40 | -21.1 |
| 16 | 16 | 48 | -20.9 |
| 12 | 12 | 56 | -20.4 |
| 8 | 8 | 64 | -20.6 |
| 4 | 4 | 72 | -19.9 |
| 0 | 0 | 80 | -19.5 |

The following examples present the results obtained during tests of the Type I fluid formulation.

### Example 1 (comparative, MPG-based):

| Raw material | Content [% wt.] |
|---|---|
| 1,2-propanediol | 80.00 |
| Tergitol L-64 | 0.1 |
| Imidazole | 0.1 |
| N-nonanoic acid | 0.1 |
| Sodium metasilicate pentahydrate | 0.0145 |
| DCQ1-6083 stabilizer | 0.00145 |
| NaOH (solid) | up to pH = 9.0-9.5 |
| SAG 7133 | 0.05 |
| Eosin yellowish | 0.006 |
| Demineralized water | up to 100% |

### Example 2 (according to the invention):

| Raw material | Content [% wt.] |
|---|---|
| 1,2-propanediol | 18.45 |
| 1.3-propanediol (bio-PDO) | 10.25 |
| Pharmaceutical glycerol, 99.5% | 53.30 |
| Tergitol L-64 | 0.1 |
| Imidazole | 0.1 |
| N-nonanoic acid | 0.1 |
| Sodium metasilicate pentahydrate | 0.0145 |
| DCQ1-6083 stabilizer | 0.00145 |
| NaOH (solid) | up to pH = 9.0-9.5 |
| SAG 7133 | 0.05 |
| Eosin yellowish | 0.006 |
| Demineralized water | up to 100% |

### Example 3 (according to the invention):

| **Raw material** | **Content [% wt.]** |
|---|---|
| 1,2-propanediol | 18.45 |
| 1.3-propanediol (bio-PDO) | 10.25 |
| Pharmaceutical glycerol, 99.5% | 53.30 |
| Tergitol L-64 | 0.3 |
| Imidazole | 0.1 |
| N-nonanoic acid | 0.1 |
| NaOH (solid) | up to pH = 9.0-9.5 |
| SAG 7133 | 0.05 |
| Eosin yellowish | 0.006 |
| Demineralized water | up to 100% |

Table 5 and Chart 2 present corrosion test results for the examples 1 - 3 as well as two samples of Type I products available in the market.

The further examples (4 - 14) also present corrosion test results for key alloys at changed proportions of n-nonanoic acid and imidazole. The base fluid was the composition from Example 2, and Table 6 contains proportions of corrosion inhibitors used, with the other component levels kept constant.

All corrosion tests for Type I fluids have been carried out as 1 : 1 (vol/vol) dilution with demineralised water since the inhibitor package is then leaner and test results more reflect their effectiveness.

Table 7 and Chart 3 show the results of corrosion testing of samples described in Table 6.

**Table 5**

| Sample name | Immersion corrosion results for different types of metal alloys [mg/cm2/24 h] | | | | | | Cadmium corrosion results according to ASTM F1111 [mg/cm2/24h] |
|---|---|---|---|---|---|---|---|
| | Aluminium alloy according to the AMS 4037 (anodized alloy acc. to AMS 2470) | Aluminium alloy according to AMS 4041 | Aluminium alloy according to AMS 4049 | Magnesium alloy acc. to AMS 4376 (chromate coated according to AMS 2475) | Titanium alloy acc. to AMS 4911 | Carbon steel acc. to AMS 5045 | |
| Example 1 | 0.00966 | 0.01294 | 0.00691 | 0.00304 | 0.00469 | 0.007278 | 0.00643 |
| Example 2 | 0.00228 | -0.00224 | 0.00230 | -0.00479 | 0.00236 | 0.005958 | -0.02178 |
| Example 3 | 0.00230 | 0.00253 | 0.00699 | 0.00208 | 0.00276 | 0.00271 | -0.02231 |
| Safewing MPI 1938 ECO (80) | 0.00000 | -0.03518 | 0.00925 | 0.02156 | -0.00943 | 0.01241 | -0.06940 |
| FCY - IA | -0.01363 | -0.01859 | 0.01836 | -0.00181 | 0.001414 | 0.009642 | 0.00405 |
| Acceptable change | 0.3 | 0.3 | 0.3 | 0.2 | 0.1 | 0.8 | 0.3 |

**Table 6**

| Sample name | Content [% wt.] | |
|---|---|---|
| | Imidazole | n-nonanoic acid |
| Example 4 | 0.025 | 0.100 |
| Example 5 | 0.050 | 0.100 |
| Example 6 | 0.075 | 0.100 |
| Example 7 | 0.100 | 0.025 |
| Example 8 | 0.100 | 0.050 |
| Example 9 | 0.100 | 0.075 |
| Example 10 | 0.100 | 0.100 |
| Example 11 | 0.100 | 0.200 |
| Example 12 | 0.100 | 0.300 |
| Example 13 | 0.100 | 0.400 |
| Example 14 | 0.100 | 0.500 |

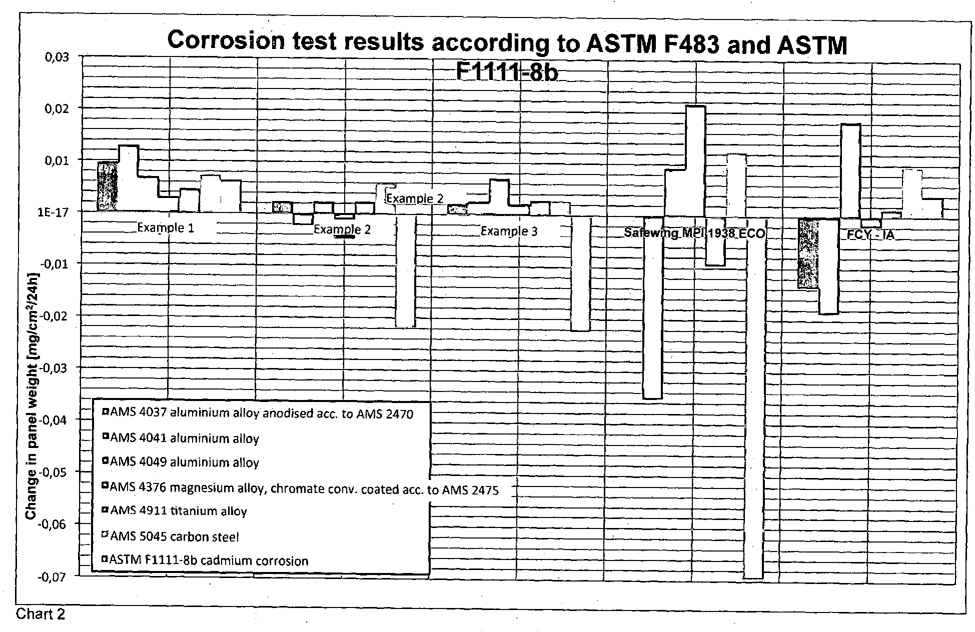

**Table 7**

| Example no. | Immersion corrosion according to ASTM F483 [mg/cm2/24h] | | | Cadmium corrosion ASTM F1111-8b [mg/cm2/24h] |
|---|---|---|---|---|
| | Aluminium alloy according to AMS 4041 | Aluminium alloy according to AMS 4049 | Titanium alloy ace. to AMS 4911 | |
| Example 4 | -0.01348 | -0.02358 | 0.00825 | -0.01346 |
| Example 5 | -0.00958 | -0.0206 | -0.00998 | -0.0171 |
| Example 6 | -0.00451 | -0.01959 | -0.00945 | -0.02092 |
| Example 7 | -0.01356 | -0.01034 | 0.01315 | -0.01094 |
| Example 8 | -0.01689 | -0.01492 | 0.01410 | -0.01729 |
| Example 9 | -0.01350 | -0.01492 | 0.01411 | -0.02039 |
| Example 10 | -0.00253 | 0.01213 | -0.01972 | -0.01793 |
| Example 11 | -0.03374 | 0.01038 | -0.03057 | -0.02654 |
| Example 12 | -0.03666 | 0.01388 | -0.02117 | -0.02009 |
| Example 13 | 0.03329 | 0.00924 | -0.01537 | -0.02028 |
| Example 14 | 0.03385 | 0.01155 | -0.01649 | -0.02222 |
| Acceptable change | 0.3 | 0.3 | 0.1 | 0.3 |

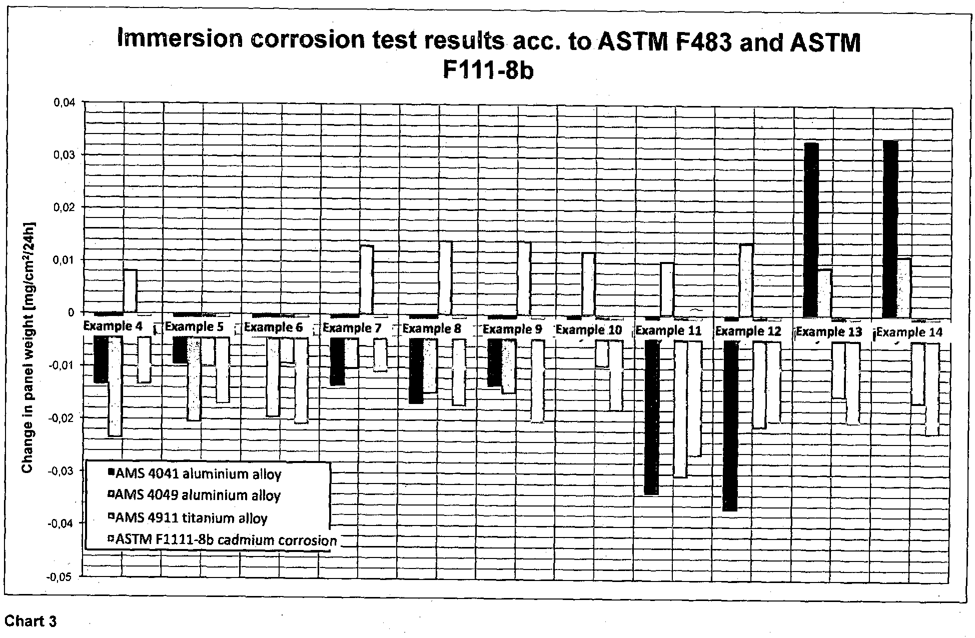

The corrosion test results obtained allow one to conclude that the imidazole/n-nonanoic acid system at a ratio of 1:1 by weight, enables achieving satisfactory results in accordance with ASTM standard 1424 even at such a low level of inhibitors. Also, after the sandwich corrosion test made for examples 2 and 10 according to ASTM F1110, no corrosion-related changes were found on the aluminium alloy samples tested.

Further, comparative tests for chemical oxygen demand were performed for the Type I fluid containing a mixture of MPG, PDO and glycerol in various proportions and concentrations. It was assumed that the effect of additives on the C.O.D. test results is negligible due to the very low contents of the additives.

### Example 15:

| Raw material | Content [% wt.] |
|---|---|
| 1,2-propanediol | 80.00 |
| 1.3-propanediol (bio-PDO) | 0.00 |
| Pharmaceutical glycerol, 99.5% | 0.00 |
| Demineralized water | 20.00 |

### Example 16:

| Raw material | Content [% wt.] |
|---|---|
| 1,2-propanediol | 18.45 |
| 1.3-propanediol (bio-PDO) | 10.25 |
| Pharmaceutical glycerol, 99.5% | 53.30 |
| Demineralized water | 18.00 |

### Example 17:

| Raw material | Content [% wt.] |
|---|---|
| 1,2-propanediol | 10.25 |
| 1.3-propanediol (bio-PDO) | 10.25 |
| Pharmaceutical glycerol, 99.5% | 61.50 |
| Demineralized water | 18.00 |

### Example 18:

| Raw material | Content [% wt.] |
|---|---|
| 1,2-propanediol | 10.50 |
| 1.3-propanediol (bio-PDO) | 10.50 |
| Pharmaceutical glycerol, 99.5% | 63.00 |
| Demineralized water | 16.00 |

Table 8 shows the C.O.D. results for a Clariant product, pure base raw materials and samples from Examples 15-18.

**Table 8.**

| Sample name | C.O.D. [kg O2/kg] |
|---|---|
| Safewing MPI 1938 ECO (80) | 1.423 |
| 1,2-propylene glycol | 1.739 |
| 1,3-propylene glycol | 1.602 |
| Glycerol | 1.141 |
| Example 15 | 1.377 |
| Example 16 | 1.149 |
| Example 17 | 1.144 |
| Example 18 | 1.193 |

Tests were also carried out for crystallization temperatures of the solutions prepared by diluting samples from Examples 2 and 15 to 18 as well as the MPI Safewing Eco (80) sample. Also carried out were comparative studies of these samples' kinematic viscosities. All results are presented in Table 9.

**Table 9.**

| Sample name | Crystallisation temperature (1:1 v/v) [°C] | Kinematic viscosity [mm2/s] |
|---|---|---|
| Safewing MPI ECO 80 | -24,5 | 20.84 |
| Example 2 | -21,2 | 45.00 |
| Example 15 | -24,7 | 14.75 |
| Example 16 | -20,5 | 37.60 |
| Example 17 | -21,0 | 40.93 |
| Example 18 | -21,8 | 49.54 |

The results obtained for the samples from Examples 2 and 16 indicate that the addition of corrosion inhibitors causes a slight reduction in the crystallization temperature, while the addition of a surfactant slightly raises the kinematic viscosity of the fluid at the same base composition.

The method for the preparation of the Type I fluid type according to the present invention described in Example 2.

| Raw material | Content [% wt.] |
|---|---|
| 1,2-propanediol | 18.45 |
| 1,3-propanediol (bio-PDO) | 10.25 |
| Pharmaceutical glycerol, 99.5% | 53.30 |
| Tergitol L-64 | 0.1 |
| Imidazole | 0.1 |
| n-nonanoic acid | 0.1 |
| Sodium metasilicate pentahydrate | 0.0145 |
| DCQ1-6083 stabilizer | 0.00145 |
| NaOH (solid) | 0.02527 |
| SAG 7133 | 0.05 |
| Eosin yellowish | 0.006 |
| Demineralized water | 17.607 |
| TOTAL | 100.0000 |

All operations should be carried out at room temperature/ambient temperature.

### 1. Preparation of the stabilized metasilicates solution:

Solution 1 in a mixer 1 dissolve sodium metasilicate pentahydrate in water (2% charge) stirring vigorously for at least 15 minutes.

Solution 2: in a different mixer 2 dissolve DCQ1-6083 in water (1% charge) stirring vigorously for at least 15 minutes.

Allow solutions 1 and 2 to stand for 30 minutes. After this time pour Solution 2 to Solution 1 in the mixer 1, stir for 10 minutes and allow to stand for another 30 minutes.

### 2. Preparation of the NaOH solution:

Into mixer 3 (final product mixer) pour the demineralized water (the remaining quantity, 14.613% of the charge, or if required leave a small amount of water to wash the container to be used for the preparation of the concentrated dye in point 6), start stirring and slowly add NaOH flakes. After the dissolution of NaOH (about 5-10 minutes) you can proceed to step 3.

### 3. Preparation of the inhibitor solutions:

Into mixer 3 add in the following order the following raw materials: n-nonanoic acid, imidazole and Tergitol L-64 (1.005 g). After each ingredient has been added, stir the composition for minimum 15 minutes.

### 4. Preparation of the base mixture:

To the aqueous solution prepared in step 3 add gradually the following ingredients: 1,2-propylene glycol, 1,3-propylene glycol, and glycerol. Stir the solution until complete clarity is obtained (after about 15-30 minutes).

### 5. Addition of the metasilicates solution:

Add the stabilised silicates mixture prepared in step 1 (prepare the solution in an appropriate advance) to mixer 3. When adding the silicate solution, the temperature must not exceed 30°C. Stir the resulting solution for a minimum of 30 minutes.

### 6. Adding the anti-foaming agent and the dye:

After the clear solution is obtained, add the anti-foaming agent and stir for a minimum of 30 minutes. You can also add the appropriate dye, preparing his pre-mix in a portion of the final fluid (e.g. in 1% of the fluid) using excess water to rinse the container.

Note: The finished product should be filtered through a 50 µm mesh filter.

The following examples illustrate the solutions applied in the formulation of the Type II fluid.

### Example 19 (comparative, MPG-based)

| Raw material | Content [% wt.] |
|---|---|
| 1,2-propanediol | 52.00 |
| Tergitol L-64 | 0.30 |
| Imidazole | 0.07 |
| n-nonanoic acid | 0.07 |
| Sodium metasilicate pentahydrate | 0.03 |
| DCQ1-6083 stabilizer | 0.0036 |
| Carbopol EZ-4 | 0.14 |
| NaOH (solid) | up to pH 7.0-7.5 |
| SAG 7133 | 0.075 |
| Fluorescein | 0.001 |
| Demineralized water | make up to 100% |

### Example 20 (according to the invention):

| Raw material | Content [% wt.] |
|---|---|
| 1,2-propanediol | 22.40 |
| 1,3-propanediol (bio-PDO) | 7.00 |
| Pharmaceutical glycerol, 99.5% | 26.60 |
| Tergitol L-64 | 0.30 |
| Imidazole | 0.07 |
| n-nonanoic acid | 0.07 |
| Sodium metasilicate pentahydrate | 0.03 |
| DCQ1-6083 stabilizer | 0.0036 |
| Carbopol EZ-4 | 0.14 |
| NaOH (solid) | up to pH 7.0-7.5 |
| SAG 7133 | 0.075 |
| Fluorescein | 0.001 |
| Demineralized water | make up to 100% |

### Example 21 (according to the invention):

| Raw material | Content [% wt.] |
|---|---|
| 1,2-propanediol | 22.40 |
| 1,3-propanediol (bio-PDO) | 7.00 |
| Pharmaceutical glycerol, 99.5% | 26.60 |
| Tergitol L-64 | 0.30 |
| Imidazole | 0.07 |
| n-nonanoic acid | 0.07 |
| Carbopol EZ-4 | 0.14 |
| NaOH (solid) | up to pH 7.0-7.5 |
| SAG 7133 | 0.075 |
| Fluorescein | 0.001 |
| Demineralized water | make up to 100% |

Both in the case of the fluid according to the formulation from Example 19, as well as Examples 20 and 21, crystallisation temperatures lower than -10°C have been obtained for solutions made by dilution of these fluids with demineralized water. Dynamic viscosities of the fluids at 0.3 rpm (LV2) were, respectively, 14800 cP, 15700 cP and 13500 cP, and when the fluids were subjected to a Waring Blender shear test the viscosities dropped to, respectively, 13600 cP (8.11% drop), 14400 cP (8.28% drop) and 12300 cP (8.88% drop).

These fluids have also been subjected to corrosion tests, i.e. immersion corrosion test according to ASTM F483, sandwich corrosion test according to ASTM F1110, and cadmium corrosion test according to ASTM F1111. After completing the sandwich corrosion tests, no change on the surfaces of the aluminium alloys tested was observed; the results of the immersion corrosion and cadmium corrosion tests are presented in Table 10 and Chart 4. The results obtained indicate that the fluids according to the present invention are safe for the alloys tested, and corrosion-related changes are within limits set forth in the relevant standards.

For the fluid from Example 20 carried out twice, average C.O.D. values obtained were 593 and 652 mg O₂/g, which is consistent with the assumption (below 660 mg O₂/g).

Tests of the Type I and Type II fluids for so called hydrogen brittleness according to ASTM F519-12a showed no adverse effect of the fluids prepared on the materials tested.

**Table 10.**

| Sample name | Immersion corrosion results for different types of metal alloys [mg/cm2/24 h] | | | | | | Cadmium corrosion results according to ASTM F1111 [mg/cm2/24h] |
|---|---|---|---|---|---|---|---|
| | Aluminium alloy acc. to AMS 4037 (anodized acc. to AMS 2470) | Aluminium alloy according to AMS 4041 | Aluminium alloy according to AMS 4049 | Magnesium alloy acc. to AMS 4376 (chromate coated according to AMS 2475) | Titanium alloy acc. to AMS 4911 | Carbon steel acc. to AMS 5045 | |
| Example 19 | - 0.0042 | - 0.0021 | - 0.0028 | - 0.0023 | - 0.0034 | - 0.0038 | - 0.0044 |
| Example 20 | - 0.0033 | - 0.0024 | - 0.0025 | - 0.0029 | - 0.0030 | - 0.0033 | - 0.0058 |
| Example 21 | - 0.0042 | - 0.0031 | - 0.0030 | - 0.0037 | - 0.0041 | - 0.0038 | - 0.0063 |
| Acceptable change | 0.3 | 0.3 | 0.3 | 0.2 | 0.1 | 0.8 | 0.3 |

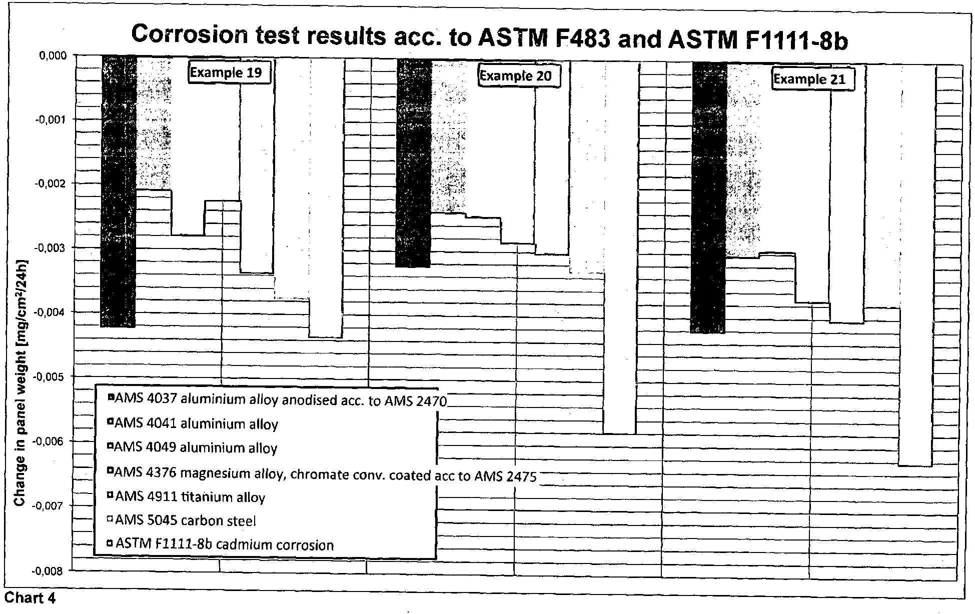

Method for the preparation of a Type II fluid according to the present invention according to Example 20.

| Raw material | Content [% wt.] |
|---|---|
| 1,2-propanediol | 22.40 |
| 1,3-propanediol (bio-PDO) | 7.00 |
| Pharmaceutical glycerol, 99.5% | 26.60 |
| Tergitol L-64 | 0.30 |
| Imidazole | 0.07 |
| n-nonanoic acid | 0.07 |
| Sodium metasilicate pentahydrate | 0.03 |
| DCQ1-6083 stabilizer | 0.0036 |
| Carbopol EZ-4 | 0.14 |
| NaOH (solid) | 0.0348 |
| SAG 7133 | 0.075 |
| Fluorescein | 0.001 |
| Demineralized water | 43.2756 |
| TOTAL | 100 % |

All operations were carried out at room temperature/ambient temperature.

### 1. Preparation of the stabilized metasilicates solution:

Solution 1: in a mixer 1 dissolve sodium metasilicate pentahydrate in water (2% charge) stirring vigorously for at least 15 minutes.

Solution 2: in a different mixer 2 dissolve DCQ1-6083 in water (1% charge) stirring vigorously for at least 15 minutes.

Allow solutions 1 and 2 to stand for 30 minutes. After this time pour Solution 2 to Solution 1 in the mixer 1, stir for 10 minutes and allow to stand for another 30 minutes.

### 2. Preparation of the thickener solution:

Into mixer 3 pour demineralized water (38% charge), start the stirrer and add NaOH flakes (0.0171% charge), stir for 15 minutes, and then start adding Carbopol EZ-4. Stir the whole mix until the complete dissolution and stabilization of viscosity for a minimum of 2 hours. A different procedure can be applied by creating a suspension of the thickener in water and gradually adding 10% NaOH solution (using a part of the water).

### 3. Loading the base composition:

Into mixer 3 containing a ready-to-work solution of the thickener add gradually, with the stirrer operating, the following ingredients in the following order: 1,2-propanediol, 1,3-propanediol, glycerol and Tergitol L-64. Stir the whole mixture to the full homogenization for a minimum of 1 hour.

### 4. Preparing the inhibitor solution and adding it to the base composition:

Into mixer 4 add in the following order the following raw materials: demineralized water (2.2766% charge, a part of water can be left if required to wash the container for the preparation of the concentrated dye), NaOH (0.0177% charge), n-nonanoic acid and imidazole. After each ingredient has been added, stir the composition for minimum 15 minutes. The composition so prepared can be added to mixer 3 containing the base composition and the thickener. Stir the whole mixture for 15 minutes.

### 5. Adding the metasilicates solution:

Add the stabilised silicates mixture prepared in step 1 (prepare the solution in an appropriate advance) to mixer 3. When adding the silicate solution, the temperature must not exceed 30°C. Stir the resulting solution for a minimum of 30 minutes.

### 6. Adding the anti-foaming agent and the dye:

After the clear solution is obtained, add the anti-foaming agent and stir for a minimum of 30 minutes. You can also add the appropriate dye, preparing his pre-mix in a portion of the final fluid (e.g. in 1% of the fluid), possibly using excess water to rinse the container.

Note: The final product was pumped using a membrane pump, and filters for the filtration had mesh size of 100 pm.

## Claims

1. An agent for removing and preventing icing comprising a base composition based on glycols and water, **characterised in that** the base composition consists of 1,2-propanediol, 1,3-propanediol and glycerol, whereas the base composition contains from 20 to 45%wt., preferably from 22 to 42%wt. of 1,2 propanediol, from 10 to 18%wt., preferably from 12 to 15%wt. of 1,3-propanediol, and from 37 to 70%, preferably from 43 to 66%wt. of glycerol.

2. The agent for removing and preventing icing according to Claim 1, **characterised in that** it comprises the base composition in a quantity from 80 to 95%wt., preferably from 80 to 88%wt., at least one non-ionic surfactant in a quantity from 0.01 to 1%wt., preferably from 0.05 to 0.5%wt., at least one corrosion inhibitor in a quantity from 0.001 to 1%wt., preferably from 0.01 to 0.5%wt., a pH buffer in a quantity from 0.01 to 0.5%wt., preferably from 0.05 to 0.3%wt., an anti-foam agent in a quantity from 0.01 to 1%wt., preferably from 0.05 to 0.2%wt., a pH regulator to achieve pH at 8.0 - 9.5, preferably from 9.0 to 9.5, a dye in a quantity from 0.001 to 0.01%wt., preferably from 0.003 to 0.007%wt., and water to make up to 100%.

3. The agent for removing and preventing icing according to Claim 1, **characterised in that** it comprises the base composition in a quantity from 50 to 65%wt., preferably from 52 to 58%wt., a thickener in a quantity from 0.05 to 0.5%wt., preferably from 0.1 to 0.2%wt., at least one non-ionic surfactant in a quantity from 0.01 to 1%wt., preferably from 0.05 to 0.5%wt., at least one corrosion inhibitor in a quantity from 0.001 to 1%wt., preferably from 0.01 to 0.5%wt., a pH buffer in a quantity from 0.01 to 0.5%wt., preferably from 0.05 to 0.3%wt., an anti-foam agent in a quantity from 0.01 to 1%wt., preferably from 0.05 to 0.2%wt., a pH regulator to achieve pH at 6.5 - 7.5, preferably up to 7.0 - 7.5, a dye in a quantity from 0.0001 to 0.002%wt., preferably from 0.0005 to 0.0015%wt., and water to make up to 100%wt.

4. The agent for removing and preventing icing according to Claim 1-3, **characterised in that** at least two components of the base composition are sourced from renewable resources, where the renewable source-based 1,2-propanediol is sourced from downstream processing of glycerol and/or 1,3-propanediol is sourced from a biotechnological process and/or glycerol is refined to minimum purity of 99.5%.

5. The agent for removing and preventing icing according to Claim 2 or 3, **characterised in that** the non-ionic surfactant is selected from a group of co-polymers of ethylene and/or propylene oxides (EO/PO), preferably with molecular mass from 2000 to 3000 g/mol.

6. The agent for removing and preventing icing according to Claim 2 or 3, **characterised in that** the corrosion inhibitor is selected from a group of alkali metal salts of C₈ - C₁₀ organic acids, preferably the sodium salt of n-nonanoic acid, and/or from a group of metasilicates with the addition of a metasilicates stabiliser, preferably hydrated metasilicates of alkali metals, most preferably the sodium metasilicate pentahydrate.

7. The agent for removing and preventing icing according to Claim 6, **characterised in that** the metasilicate is in a quantity from 0.01 to 0.05%, preferably from 0.012 to 0.04%.

8. The agent for removing and preventing icing according to Claim 6, **characterised in that** the silicates stabiliser is in a quantity from 0.001 to 0.005%wt., preferably from 0.001 to 0.004%wt., said stabiliser preferably selected from a group of siloxanes modified with phosphonic groups.

9. The agent for removing and preventing icing according to Claim 2 or 3, **characterised in that** imidazole is used as the pH buffer.

10. The agent for removing and preventing icing according to Claim 2 or 3, **characterised in that** a silicon oil is used as the anti-foam agent.

11. The agent for removing and preventing icing according to Claim 2 or 3, **characterised in that** an alkaline metal hydroxide, preferably sodium hydroxide, is used as the pH regulator.

12. The agent for removing and preventing icing according to Claim 3, **characterised in that** the thickener is selected from a group of polyacrylic acid derivatives, preferably cross-linked, partly hydrofobised polyacrylic acid.

13. The agent for removing and preventing icing according to Claim 2, **characterised in that** eosin yellowish is used as the dye.

14. The agent for removing and preventing icing according to Claim 3, **characterised in that** fluorescein is used as the dye.

## Patentansprüche

1. Mittel zum Entfernen und Verhindern von Vereisungen, das auf Basis einer Mischung aus Glykolen und Wasser besteht, **dadurch gekennzeichnet, dass** die Basiszusammensetzung aus 1,2-Propandiol, 1,3-Propandiol und Glyzerin besteht, während die Basiszusammensetzung 20 bis 45 Gew.-%, vorzugsweise 22 bis 42 Gew.-% 1,2-Propandiol, 10 bis 18 Gew.-%, vorzugsweise 12 bis 15 Gew.-% 1,3-Propandiol und 37 bis 70 %, vorzugsweise 43 bis 66 Gew.-% Glyzerin enthält.

2. Mittel zum Entfernen und Verhindern von Vereisungen nach Anspruch 1, **dadurch gekennzeichnet, dass** die Basiszusammensetzung 80 bis 95 Gew.-%, vorzugsweise 80 bis 88 Gew.-%, mindestens ein nichtionisches Tensid von 0,01 bis 1 Gew.-%, vorzugsweise von 0,05 bis 0,5 Gew.-%, mindestens einen Korrosionsinhibitor von 0,001 bis 1 Gew.-%, vorzugsweise von 0,01 bis 0,5 Gew.-%, einen pH-Puffer von 0,01 bis 0,5 Gew.-%, vorzugsweise von 0,05 bis 0,3 Gew.-%, ein Antischaummittel von 0,01 bis 1 Gew.-%, vorzugsweise von 0,05 bis 0,2 Gew.-%, einen pH-Regler zum Erreichen des pH-Wertes von 8,0 - 9,5, vorzugsweise 9,0 - 9,5, einen Farbstoff von 0,001 - 0,01 Gew.-%, vorzugsweise 0,003 - 0,007 Gew.-%, und Wasser, zum Auffüllen auf 100 %, enthält.

3. Mittel zum Entfernen und Verhindern von Vereisungen nach Anspruch 1, **dadurch gekennzeichnet, dass** die Basiszusammensetzung von 50 bis 65 Gew.-%, vorzugsweise 52 bis 58 Gew.-%, ein Verdickungsmittel in einer Menge von 0,05 bis 0,5 Gew.-%, vorzugsweise von 0,1 bis 0,2 Gew.-%, mindestens ein nichtionisches Tensid von 0,01 bis 1 Gew.-%, vorzugsweise von 0,05 bis 0,5 Gew.-%, mindestens einen Korrosionsinhibitor von 0,001 bis 1 Gew.-%, vorzugsweise von 0,01 bis 0,5 Gew.-%, einen pH-Puffer von 0,01 bis 0,5 Gew.-%, vorzugsweise von 0,05 bis 0,3 Gew.-%, einen Antischaumstoff von 0,01 bis 1 Gew.-%, vorzugsweise von 0,05 bis 0,2 Gew.-%, einen pH-Regler zum Erreichen eines pH-Wertes von 6,5 bis 7,5, vorzugsweise 7,0 bis 7,5, einen Farbstoff von 0,0001 bis 0,002 Gew.-%, vorzugsweise von 0,0005 bis 0,0015 Gew.-%, und Wasser, zum Auffüllen auf 100 Gew.-% enthält.

4. Mittel zum Entfernen und Verhindern von Vereisungen nach Anspruch 1-3, **dadurch gekennzeichnet, dass** mindestens zwei Komponenten der Basiszusammensetzung aus erneuerbaren Quellen bezogen werden, wobei das auf erneuerbaren Quellen basierende 1,2-Propandiol aus der sekundären Verarbeitung von Glyzerin und/oder 1,3-Propandiol aus einem biotechnologischen Prozess bezogen und/oder eine Mindestreinheit von Glyzerin bei 99,5% erreicht wird.

5. Mittel zum Entfernen und Verhindern von Vereisungen nach Anspruch 2 oder 3, **dadurch gekennzeichnet, dass** das nichtionische Tensid aus einer Gruppe von Copolymeren von Ethylen- und/oder Propylenoxiden (EO/PO), vorzugsweise mit einer molaren Masse von 2000 bis 3000 g/mol, ausgewählt wird.

6. Mittel zum Entfernen und Verhindern von Vereisungen nach Anspruch 2 oder 3, **dadurch gekennzeichnet, dass** der Korrosionsinhibitor aus einer Gruppe von Alkalimetallsalzen von Ca - C10 organischen Säuren, vorzugsweise dem Natriumsalz von n-Nonansäure, und/oder aus einer Gruppe von Metasilikaten unter Zusatz eines Metasilikat-Stabilisators, vorzugsweise hydratisierter Metasilikate von Alkalimetallen, insbesondere des Natriummetasilikat-Pentahydrats, ausgewählt wird.

7. Mittel zum Entfernen und Verhindern von Vereisungen nach Anspruch 6, **dadurch gekennzeichnet, dass** Metasilikat in einer Mengen von 0,01 bis 0,05 %, vorzugsweise von 0,012 bis 0,04 % verwendet wird.

8. Mittel zum Entfernen und Verhindern von Vereisungen nach Anspruch 6, **dadurch gekennzeichnet, dass** der Silikatstabilisator in einer Menge von 0,001 bis 0,005 Gew.-%, vorzugsweise 0,001 bis 0,004 Gew.-% verwendet wird, wobei der Stabilisator vorzugsweise aus einer Gruppe von mit Phosphongruppen modifizierten Siloxanen ausgewählt ist.

9. Mittel zum Entfernen und Verhindern von Vereisungen nach Anspruch 2 oder 3, **dadurch gekennzeichnet, dass** Imidazol als pH-Puffer verwendet wird.

10. Mittel zum Entfernen und Verhindern von Vereisungen nach Anspruch 2 oder 3, **dadurch gekennzeichnet, dass** Antischaummittel ein Silikonöl verwendet wird.

11. Mittel zum Entfernen und Verhindern von Vereisungen nach Anspruch 2 oder 3, **dadurch gekennzeichnet, dass** als pH-Regler ein Alkalimetallhydroxid, vorzugsweise Natriumhydroxid, verwendet wird.

12. Mittel zum Entfernen und Verhindern von Vereisungen nach Anspruch 3, **dadurch gekennzeichnet, dass** das Verdickungsmittel aus einer Gruppe von Polyacrylsäurederivaten, vorzugsweise vernetzten, teilhydrofobierten Polyacrylsäuren ausgewählt wird.

13. Mittel zum Entfernen und Verhindern von Vereisungen nach Anspruch 2, **dadurch gekennzeichnet, dass** als Farbstoff gelbliches Eosin verwendet wird

14. Mittel zum Entfernen und Verhindern von Vereisungen nach Anspruch 3, **dadurch gekennzeichnet, dass** als Farbstoff Fluorescein verwendet wird.

## Revendications

1. Un agent pour éliminer et empêcher le givrage, comprenant une composition de base à base de glycols et d'eau, **caractérisé en ce que** la composition de base consiste en propane-1,2-diol, propane-1,3-diol et glycérol, tandis que la composition de base contient de 20 à 45 % en poids, de préférence de 22 à 42 % en poids de propane-1,2-diol, de 10 à 18 % en poids, de préférence de 12 à 15 % en poids de propane-1,3-diol et de 37 à 70 % en poids, de préférence 43 à 66 % en poids de glycérol.

2. L'agent pour éliminer et empêcher le givrage selon la revendication 1, **caractérisé en ce qu'**il comprend la composition de base en quantité de 80 à 95 % en poids, de préférence de 80 à 88 % en poids, au moins un agent de surface non ionique en quantité de 0,01 à 1 % en poids, de préférence de 0,05 à 0,5 % en poids, au moins un inhibiteur de corrosion en quantité de 0,001 à 1 % en poids, de préférence de 0,01 à 0,5 % en poids, un tampon de pH en quantité de 0,01 à 0,5 % en poids, de préférence de 0,05 à 0,3 % en poids, un agent anti-mousse en quantité de 0,01 à 1 % en poids, de préférence de 0,05 à 0,2 % en poids, un régulateur de pH pour atteindre un pH de 8,0 à 9,5, de préférence de 9,0 à 9,5, un colorant en quantité de 0,001 à 0,01 % en poids, de préférence de 0,003 à 0,007 % en poids, et de l'eau pour compléter à 100 %.

3. L'agent pour éliminer et empêcher le givrage selon la revendication 1, **caractérisé en ce qu'**il comprend la composition de base en quantité de 50 à 65 % en poids, de préférence de 52 à 58 % en poids, un épaississant en quantité de 0,05 à 0,5 % en poids, de préférence de 0,1 à 0,2 % en poids, au moins un agent de surface non ionique en quantité de 0,01 à 1 % en poids, de préférence de 0,05 à 0,5 % en poids, au moins un inhibiteur de corrosion en quantité de 0,001 à 1 % en poids, de préférence de 0,01 à 0,5 % en poids, un tampon de pH en quantité de 0,01 à 0,5 % en poids, de préférence de 0,05 à 0,3 % en poids, un agent anti-mousse en quantité de 0,01 à 1 % en poids, de préférence de 0,05 à 0,2 % en poids, un régulateur de pH pour atteindre un pH de 6,5 à 7,5, de préférence jusqu'à 7,0 - 7,5, un colorant en quantité de 0,0001 à 0,002 % en poids, de préférence de 0,0005 à 0,0015 % en poids, et de l'eau pour compléter à 100 %.

4. L'agent pour éliminer et empêcher le givrage selon les revendications 1 à 3, **caractérisé en ce qu'**au moins deux composants de la composition de base proviennent de ressources renouvelables, le propane- 1,2-diol à base de source renouvelable provenant du traitement en aval du glycérol et/ou le propane-1,3-diol provenant d'un processus biotechnologique et/ou le glycérol étant raffiné à une pureté minimale de 99,5 %.

5. L'agent pour éliminer et empêcher le givrage selon la revendication 2 ou 3, **caractérisé en ce que** l'agent de surface non ionique est choisi dans un groupe de copolymères d'oxyde d'éthylène et/ou de propylène (EO/PO), de préférence de masse moléculaire comprise entre 2000 et 3000 g/mol.

6. L'agent pour éliminer et empêcher le givrage selon la revendication 2 ou 3, **caractérisé en ce que** l'inhibiteur de corrosion est choisi parmi un groupe de sels de métaux alcalins d'acides organiques Ca - C10, de préférence le sel de sodium de l'acide n-nonanoïque, et/ou dans un groupe de métasilicates avec addition d'un stabilisateur de métasilicates, de préférence des métasilicates hydratés de métaux alcalins, le pentahydrate de métasilicate de sodium étant le plus préférable.

7. L'agent pour éliminer et empêcher le givrage selon la revendication 6, **caractérisé en ce que** le métasilicate est en quantité de 0,01 à 0,05 %, de préférence de 0,012 à 0,04 %.

8. L'agent pour éliminer et empêcher le givrage selon la revendication 6, **caractérisé en ce que** le stabilisant de silicates est en quantité de 0,001 à 0,005 % en poids, de préférence de 0,001 à 0,004 % en poids, ledit stabilisant étant de préférence choisi parmi un groupe de siloxanes modifiés par des groupes phosphoniques.

9. L'agent pour éliminer et empêcher le givrage selon la revendication 2 ou 3, **caractérisé en ce que** l'imidazole est utilisé comme tampon de pH.

10. L'agent pour éliminer et empêcher le givrage selon la revendication 2 ou 3, **caractérisé en ce qu'**un huile de silicone est utilisé comme un agent anti-mousse.

11. L'agent pour éliminer et empêcher le givrage selon la revendication 2 ou 3, **caractérisé en ce qu'**un d'hydroxyde de métal alcalin, de préférence l'hydroxyde de sodium, est utilisé comme régulateur de pH.

12. L'agent pour éliminer et empêcher le givrage selon la revendication 3, **caractérisé en ce que** l'épaississant est choisi dans un groupe de dérivés d'acide polyacrylique, de préférence de l'acide polyacrylique réticulé, partiellement hydrophobé.

13. L'agent pour éliminer et empêcher le givrage selon la revendication 2, **caractérisé en ce que** l'éosine J (jaunâtre) est utilisée comme colorant.

14. L'agent pour éliminer et empêcher le givrage selon la revendication 3, **caractérisé en ce que** la fluorescéine est utilisée comme colorant.
